# EUROPEAN PATENT SPECIFICATION

(11) **EP 3 750 747 B1**
(45) Date of publication and mention of the grant of the patent: **13.04.2022**
(21) Application number: 18718496.5
(22) Date of filing: 08.02.2018
(51) Int. Cl.: B60P 1/44, B60P 3/14, B60C 25/05, B60C 25/138

(54) **VEHICLE-MOUNTED TIRE CHANGER**
AUF EINEM FAHRZEUG MONTIERTE REIFENWECHSELMASCHINE
MACHINE DE CHANGEMENT DE PNEU MONTÉ SUR UN VÉHICULE

(43) Date of publication of application: 16.12.2020
(73) Proprietor: Aguado Romero, José María, 28850 Torrejon de Ardoz Madrid (ES)
(72) Inventor: Aguado Romero, José María, 28850 Torrejon de Ardoz Madrid (ES)
(74) Representative: Pons
(86) International application number: PCT/ES2018/070090
(87) International publication number: WO 2019/155096

(56) References cited:
- EP-A2- 1 238 831
- EP-A2- 1 364 814
- WO-A1-98/36921
- CN-U- 201 685 667

## Description

### OBJECT OF THE INVENTION

The present invention relates to a mobile tire changing device comprising a pneumo-hydraulic pump, where the pneumo-hydraulic pump carries out the actuation of the tire changing device through a flow of hydraulic oil at high pressure, where the only power source for the operation of the pneumo-hydraulic pump is compressed air.

The mobile tire changing device thus constituted enables the tire changing tasks to be carried out by only applying compressed air, which is also used to carry out the inflation of the tire.

### BACKGROUND OF THE INVENTION

The European patent with publication number EP1238831, which discloses a tire changing system comprising a vehicle that has an internal combustion engine, a drive shaft driven by the engine, and a power take-off that can be connected to the transmission shaft in order to obtain the rotational output torque from the engine, is known in the state of the art.

The power take-off unit is connected to a hydraulic pump that provides hydraulic power to a hydraulic circuit, which in turn drives a tire changing device mounted in the vehicle.

The use of the previous tire changing device avoids the need for a highvoltage generator, so that all the components of the system can be operated safely within the vehicle, the system including a hydraulically actuated compressor and a tire inflating device, which uses compressed air from the compressor. However, in the previous tire changing system, the compressor requires an auxiliary engine to compress the air.

The Japanese patent with publication number JP2007050734 is also known, relating to an automobile that supplies electric power and compressed air for tire replacing work. In said automobile, the internal combustion engine thereof actuates, through a power take-off unit and a transmission assembly, an alternator that produces direct current and that is converted by means of an inverter into an alternating current at a predetermined voltage and frequency. The power take-off, by means of another transmission assembly, transmits the rotation to a compressor, such that the actuation of the alternator and the compressor are made totally independent, requiring complex transmission systems which decrease the useful volume inside the vehicle body.

European patent EP2514609B1 of this same applicant is also known, relating to a tire changing device that comprises a vehicle with an internal combustion engine, a shaft driven by said engine and a power take-off unit adapted to take the power from said shaft, where the power take-off unit transmits the power from said shaft to a compressor and to a generator that are arranged under the loading plane of the vehicle, and where the compressor and the generator have the same rotation shaft and transmit the power thereof to a tire changing machine integrated in the vehicle.

However, all the previous devices need to carry out modifications in the vehicle in order to couple the power take-off unit to the shaft driven by the internal combustion engine. Furthermore, they need at least one element from among the following: the generator, the electric motor of the hydraulic pump or the electric motor that carries out the rotation of the assembly and disassembly head of the tires, with which it is necessary that the devices be powered electrically, this supply not being available in hard-to-access places.

All the previous drawbacks are overcome by means of the invention that will now be described, where the mobile tire changing device enables carrying out the tire changing tasks in remote areas where there is no electric or hydraulic supply.

Document CN201685667 discloses a tire changing device suitable for being coupled to a vehicle.

### DESCRIPTION OF THE INVENTION

The present invention relates to a mobile tire changing device comprising a pneumo-hydraulic pump, where the pneumo-hydraulic pump is configured to carry out the actuation of the tire changing device through a flow of hydraulic oil and where the pneumo-hydraulic pump is actuated only by means of compressed air.

The mobile tire changing device comprises at least one disassembly head configured to support the tire and/or a disassembly tool configured to carry out the disassembly and assembly of the tire with respect to a rim.

Optionally, the tire changing device further comprises:
- rotation means configured to carry out the rotation of the disassembly head configured to support the tire, said rotation means being actuated by the flow of hydraulic oil, by means of the pneumo-hydraulic pump; and/or
- first movement means configured to carry out the movement in a longitudinal direction of the device, said first movement means being actuated by the flow of hydraulic oil by means of the pneumo-hydraulic pump.

Optionally, the tire changing device further comprises:
- second movement means configured to carry out the movement in a longitudinal direction, of the disassembly head, said second movement means being actuated by the flow of hydraulic oil by means of the pneumo-hydraulic pump, and/or
- third movement means configured to carry out the movement in a transverse direction of the disassembly head, the transverse direction being perpendicular to the longitudinal direction, and said third movement means being actuated by the flow of hydraulic oil by means of the pneumo-hydraulic pump.

The mobile tire changing device thus constituted enables the tire changing tasks to be carried out by only applying compressed air, which is also used to carry out the inflation of the tire.

According to the invention, none of the elements of the generator group are necessary, among which the compressor and the generator can be found, such that the volume occupied by said mobile tire changing device is reduced, and the heat sources and existence of exhaust gases due to auxiliary internal combustion engines are removed.

The previous configuration further makes having auxiliary elements unnecessary, such as batteries, auxiliary fuel or air tanks, or fans attached to the device for carrying out the tire changing tasks.

According to an embodiment of the invention, the mobile tire changing device is able to be coupled to a vehicle.

### BRIEF DESCRIPTION OF THE DRAWINGS

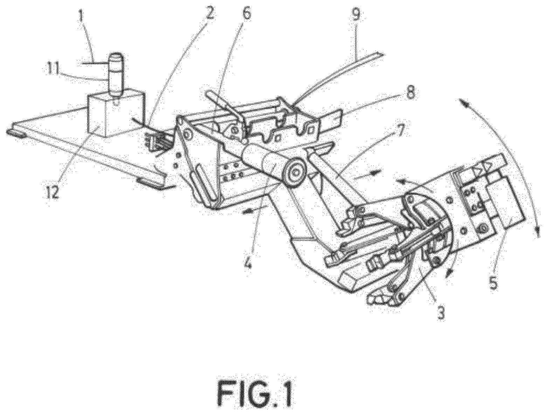

Figure 1 shows a perspective view of the mobile tire changing device of the present invention.

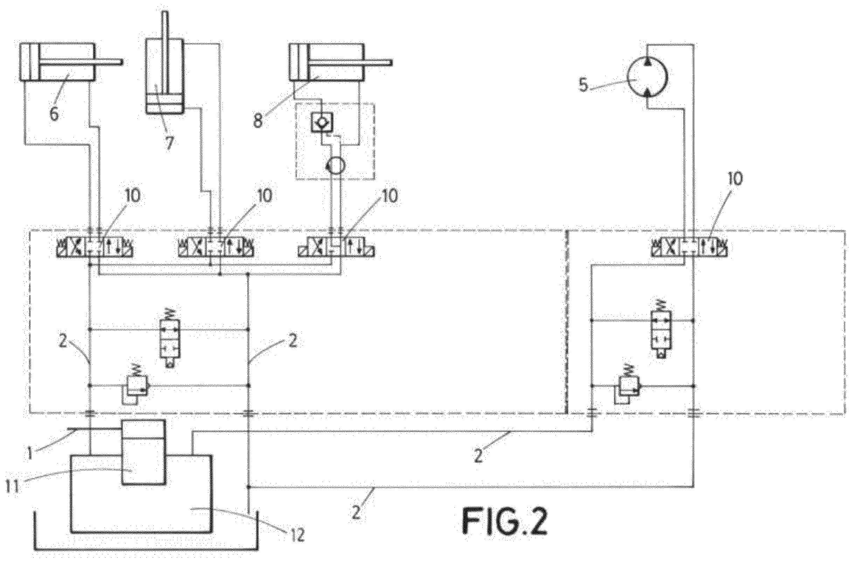

Figure 2 shows a hydraulic diagram of the mobile tire changing device of the present invention with actuation through the pneumo-hydraulic pump actuated only by means of compressed air.

### PREFERRED EMBODIMENT OF THE INVENTION

The mobile tire changing device of the present invention will be described below.

The present invention relates to a mobile tire changing device comprising a pneumo-hydraulic pump (11), where the pneumo-hydraulic pump (11) is configured to carry out the actuation of the tire changing device through a flow (2) of hydraulic oil (12) and where the pneumo-hydraulic pump (11) is actuated only by means of compressed air (1), where preferably, the pneumo-hydraulic pump (11) has an inlet pressure of compressed air (1) of 8 bar and an outlet hydraulic pressure of 160 bar.

The mobile tire changing device comprises at least one disassembly head (3) configured to support the tire (not shown) and a disassembly tool (4) configured to carry out the disassembly and assembly of the tire with respect to a rim (not shown).

The tire changing device further comprises rotation means (5), preferably a hydraulic motor, configured to carry out the rotation of the disassembly head (3) configured to support the tire, said hydraulic motor being actuated by the flow (2) of hydraulic oil (12) by means of the pneumo-hydraulic pump (11).

The tire changing device further comprises first movement means (6), preferably a first hydraulic cylinder, configured to carry out the movement in a longitudinal direction, of the device, said first hydraulic cylinder being actuated by the flow (2) of hydraulic oil (12) by means of the pneumo-hydraulic pump (11).

The tire changing device further comprises second movement means (7), preferably a second hydraulic cylinder, configured to carry out the movement, in a longitudinal direction, of the disassembly head (3), this longitudinal direction preferably being the longitudinal or transverse direction of a vehicle where the mobile tire changing device can be coupled, said second hydraulic cylinder being actuated by the flow (2) of hydraulic oil (12) by means of the pneumo-hydraulic pump (11).

The tire changing device further comprises third movement means (8), preferably a third hydraulic cylinder, configured to carry out the movement, in a transverse direction, of the disassembly head (3), this transverse direction preferably being the transverse or longitudinal direction of the vehicle where the mobile tire changing device can be coupled, the transverse direction being perpendicular to the longitudinal direction, and said third hydraulic cylinder being actuated by the flow (2) of hydraulic oil (12) by means of the pneumo-hydraulic pump (11).

The tire changing device further comprises inflation means (9) configured to carry out the inflation of a tire.

The mobile tire changing device further comprises an assembly of pneumatic valves (10) or electromagnetic valves, preferably 12 V, configured to enable the passage of hydraulic oil (12) in different directions from the pneumo-hydraulic pump (11) to the rotation means (5), to the first (6), second (7) and third (8) movement means.

According to an embodiment of the invention, the mobile tire changing device is able to be coupled to any vehicle.

## Claims

1. Tire changing device intended to be coupled to a vehicle **characterized in that** it comprises a pneumo-hydraulic pump (11), where the pneumo-hydraulic pump (11) is configured to carry out the actuation of the tire changing device through a flow (2) of hydraulic oil (12) and where the pneumo-hydraulic pump (11) is actuated only by means of compressed air (1).

2. Tire changing device intended to be coupled to a vehicle according to claim 1, **characterized in that** it comprises at least one disassembly head (3) configured to support the tire and/or a disassembly tool (4) configured to carry out the disassembly and assembly of the tire with respect to a rim.

3. Tire changing device intended to be coupled to a vehicle according to claim 2, **characterized in that** it comprises rotation means (5) configured to carry out the rotation of the disassembly head (3) configured to support the tire, said rotation means (5) being actuated by the flow (2) of hydraulic oil (12) by means of the pneumo-hydraulic pump (11).

4. Tire changing device intended to be coupled to a vehicle according to any of claims 2 or 3, **characterized in that** it further comprises first movement means (6) configured to carry out the movement of the device, said first movement means (6) being actuated by the flow (2) of hydraulic oil (12) by means of the pneumo-hydraulic pump (11).

5. Tire changing device intended to be coupled to a vehicle according to any of claims 2 to 4, **characterized in that** it further comprises second movement means (7) configured to carry out the movement of the disassembly head (3), said second movement means (7) being actuated by the flow (2) of hydraulic oil (12) by means of the pneumo-hydraulic pump (11).

6. Tire changing device intended to be coupled to a vehicle according to any of claims 2 to 5, **characterized in that** it further comprises third movement means (8) configured to carry out the movement of the disassembly head (3), said third movement means (8) being actuated by the flow (2) of hydraulic oil (12) by means of the pneumo-hydraulic pump (11).

7. Tire changing device intended to be coupled to a vehicle according to any of the preceding claims, **characterized in that** it further comprises inflation means (9) configured to carry out the inflation of a tire.

8. Tire changing device intended to be coupled to a vehicle according to claims 3 to 6, **characterized in that** it further comprises an assembly of pneumatic valves (10) configured to enable the passage of the flow (2) of hydraulic oil (12) from the pneumo-hydraulic pump (11) to the rotation means (5), and to the first (6), second (7) and third (8) movement means.

9. Tire changing device intended to be coupled to a vehicle according to any of the preceding claims, **characterized in that** the pneumo-hydraulic pump (11) has an inlet pressure of compressed air (1) of 8 bar and an outlet hydraulic pressure of 160 bar.

10. Vehicle comprising a tire changing device according to any of the preceding claims, where the device is intended to be coupled to said vehicle.

## Patentansprüche

1. Reifenwechselvorrichtung, die zum Koppeln an ein Fahrzeug bestimmt ist, **dadurch gekennzeichnet, dass** sie eine pneumohydraulische Pumpe (11) umfasst, wobei die pneumohydraulische Pumpe (11) konfiguriert ist, um die Betätigung der Reifenwechselvorrichtung durch einen Strom (2) von Hydrauliköl (12) durchzuführen, und wobei die pneumohydraulische Pumpe (11) nur mittels Druckluft (1) betätigt wird.

2. Reifenwechselvorrichtung, die zum Koppeln an ein Fahrzeug bestimmt ist, nach Anspruch 1, **dadurch gekennzeichnet, dass** sie mindestens einen Demontagekopf (3) zum Halten des Reifens und/oder ein Demontagewerkzeug (4) zum Durchführen der Demontage und Montage des Reifens in Bezug auf eine Felge umfasst.

3. Reifenwechselvorrichtung, die zum Koppeln an ein Fahrzeug bestimmt ist, nach Anspruch 2, **dadurch gekennzeichnet, dass** sie Drehmittel (5) umfasst, die konfiguriert sind, um die Drehung des Demontagekopfs (3) durchzuführen, der konfiguriert ist, um den Reifen zu stützen, wobei die Drehmittel (5) durch den Strom (2) des Hydrauliköls (12) mittels der pneumohydraulischen Pumpe (11) betätigt werden.

4. Reifenwechselvorrichtung, die zum Koppeln an ein Fahrzeug bestimmt ist, nach einem der Ansprüche 2 oder 3, **dadurch gekennzeichnet, dass** sie ferner erste Bewegungsmittel (6) umfasst, die konfiguriert ist, um die Bewegung der Vorrichtung durchzuführen, wobei die ersten Bewegungsmittel (6) durch den Strom (2) von Hydrauliköl (12) mittels der pneumohydraulischen Pumpe (11) betätigt werden.

5. Reifenwechselvorrichtung, die zum Koppeln an ein Fahrzeug bestimmt ist, nach einem der Ansprüche 2 bis 4, **dadurch gekennzeichnet, dass** sie ferner zweite Bewegungsmittel (7) umfasst, die konfiguriert sind, um die Bewegung des Demontagekopfs (3) durchzuführen, wobei die zweiten Bewegungsmittel (7) durch den Strom (2) des Hydrauliköls (12) mittels der pneumohydraulischen Pumpe (11) betätigt werden.

6. Reifenwechselvorrichtung, die zum Koppeln an ein Fahrzeug bestimmt ist, nach einem der Ansprüche 2 bis 5, **dadurch gekennzeichnet, dass** sie ferner dritte Bewegungsmittel (8) umfasst, die konfiguriert sind, um die Bewegung des Demontagekopfs (3) durchzuführen, wobei die dritten Bewegungsmittel (8) durch den Strom (2) des Hydrauliköls (12) mittels der pneumohydraulischen Pumpe (11) betätigt werden.

7. Reifenwechselvorrichtung, die zum Koppeln an ein Fahrzeug bestimmt ist, nach einem der vorhergehenden Ansprüche, **dadurch gekennzeichnet, dass** sie ferner Aufblasmittel (9) umfasst, die konfiguriert sind, um das Aufpumpen eines Reifens durchzuführen.

8. Reifenwechselvorrichtung, die zum Koppeln an ein Fahrzeug bestimmt ist, nach den Ansprüchen 3 bis 6, **dadurch gekennzeichnet, dass** sie ferner eine Anordnung von pneumatischen Ventilen (10) umfasst, die konfiguriert sind, um den Durchfluss (2) von Hydrauliköl (12) von der pneumohydraulische Pumpe (11) zu den Drehmitteln (5) und zu den ersten (6), zweiten (7) und dritten (8) Bewegungsmitteln zu ermöglichen.

9. Reifenwechselvorrichtung, die zum Koppeln an ein Fahrzeug bestimmt ist, nach einem der vorhergehenden Ansprüche, **dadurch gekennzeichnet, dass** die pneumohydraulische Pumpe (11) einen Einlassdruck der Druckluft (1) von 8 bar und einen hydraulischen Auslassdruck von 160 bar aufweist.

10. Fahrzeug umfassend eine Reifenwechselvorrichtung nach einem der vorhergehenden Ansprüche, wobei die Vorrichtung zum Koppeln an das Fahrzeug bestimmt ist.

## Revendications

1. Dispositif de changement de pneu destiné à être attelé à un véhicule **caractérisé en ce qu'**il comprend une pompe pneumohydraulique (11), où la pompe pneumohydraulique (11) est configurée pour réaliser l'actionnement du dispositif de changement de pneu à travers un flux (2) d'huile hydraulique (12) et où la pompe pneumohydraulique (11) est actionnée uniquement au moyen d'air comprimé (1).

2. Dispositif de changement de pneu destiné à être attelé à un véhicule selon la revendication 1, **caractérisé en ce qu'**il comprend au moins une tête de démontage (3) configurée pour mettre en appui le pneu et/ou un outil de démontage (4) configuré pour réaliser le démontage et le montage du pneu par rapport à une jante.

3. Dispositif de changement de pneu destiné à être attelé à un véhicule selon la revendication 2, **caractérisé en ce qu'**il comprend un moyen de rotation (5) configuré pour réaliser la rotation de la tête de démontage (3) configurée pour mettre en appui le pneu, ledit moyen de rotation (5) étant actionné par le flux (2) d'huile hydraulique (12) au moyen de la pompe pneumohydraulique (11).

4. Dispositif de changement de pneu destiné à être attelé à un véhicule selon l'une quelconque des revendications 2 ou 3, **caractérisé en ce qu'**il comprend en outre un premier moyen de déplacement (6) configuré pour réaliser le déplacement du dispositif, ledit premier moyen de déplacement (6) étant actionné par le flux (2) d'huile hydraulique (12) au moyen de la pompe pneumohydraulique (11).

5. Dispositif de changement de pneu destiné à être attelé à un véhicule selon l'une quelconque des revendications 2 à 4, **caractérisé en ce qu'**il comprend en outre un deuxième moyen de déplacement (7) configuré pour réaliser le déplacement de la tête de démontage (3), ledit deuxième moyen de déplacement (7) étant actionné par le flux (2) d'huile hydraulique (12) au moyen de la pompe pneumohydraulique (11).

6. Dispositif de changement de pneu destiné à être attelé à un véhicule selon l'une quelconque des revendications 2 à 5, **caractérisé en ce qu'**il comprend en outre un troisième moyen de déplacement (8) configuré pour réaliser le déplacement de la tête de démontage (3), ledit troisième moyen de déplacement (8) étant actionné par le flux (2) d'huile hydraulique (12) au moyen de la pompe pneumohydraulique (11).

7. Dispositif de changement de pneu destiné à être attelé à un véhicule selon l'une quelconque des revendications précédentes, **caractérisé en ce qu'**il comprend en outre un moyen de gonflage (9) configuré pour réaliser le gonflage d'un pneu.

8. Dispositif de changement de pneu destiné à être attelé à un véhicule selon les revendications 3 à 6, **caractérisé en ce qu'**il comprend en outre un montage de vannes pneumatiques (10) configurées pour permettre le passage du flux (2) d'huile hydraulique (12) de la pompe pneumohydraulique (11) vers le moyen de rotation (5), et vers les premier (6), deuxième (7) et troisième (8) moyens de déplacement.

9. Dispositif de changement de pneu destiné à être attelé à un véhicule selon l'une quelconque des revendications précédentes, **caractérisé en ce que** la pompe pneumohydraulique (11) a une pression d'entrée d'air comprimé (1) de 8 bars et une pression hydraulique de sortie de 160 bars.

10. Véhicule comprenant un dispositif de changement de pneu selon l'une quelconque des revendications précédentes, où le dispositif est destiné à être attelé audit véhicule.
